# DEMANDE DE BREVET EUROPEEN

(11) **EP 2 924 638 A1**
(43) Date de publication de la demande: **30.09.2015**
(21) Numéro de dépôt: 15160014.5
(22) Date de dépôt: 20.03.2015
(51) Int. Cl.: G06Q 20/12, G06Q 20/40, G06Q 20/42

(54) **Procédé et système de paiement divisé d'un produit ou service**

(30) Priorité: 25.03.2014 FR 1452493
(71) Demandeur: Haddad, David, 75019 Paris (FR)
(72) Inventeur: Haddad, David, 75019 Paris (FR)
(74) Mandataire: Casalonga

(57) **Abrégé**

Ce système de paiement d'un produit ou service, pour le paiement d'un produit ou service selon plusieurs règlements, comprend un module de paiement (5) accessible par un ou plusieurs acheteurs par l'intermédiaire d'un réseau (R) de télécommunication pour permettre audit acheteur de sélectionner le produit ou service et transmettre audit module des informations portant sur le paiement divisé du produit ou service comprenant le nombre de règlements et l'indication du ou de chaque acquéreur.

Le module de paiement comporte également des moyens (7) pour émettre à destination du ou de chaque acquéreur un message électronique contenant des règles d'exécution de chaque règlement élaborées par le module de paiement.

## Description

L'invention concerne, de manière générale, le paiement en ligne de produits ou services.

Elle se rapporte plus particulièrement, dans une application intéressante de l'invention, au paiement en ligne de titres de transport, tels que des billets d'avions.

Lors de la commande d'un produit ou service, et notamment la commande d'un titre de transport, la mise à disposition du titre n'intervient qu'après règlement de son prix.

Les intermédiaires qui assurent l'interface entre un client et le tiers fournisseur de service, en l'espèce une compagnie aérienne, n'autorisent la délivrance du titre commandé qu'après règlement total du prix.

Toutefois, dans certains cas, il peut arriver que les produits ou services fassent l'objet d'une commande groupée pour plusieurs personnes qui souhaitent en bénéficier ensemble, c'est-à-dire pour le compte de plusieurs utilisateurs finaux. Il peut également arriver qu'un acquéreur souhaite régler le prix demandé selon plusieurs règlements.

Ainsi, il peut arriver que l'achat s'effectue pour un ou plusieurs acquéreurs qui souhaitent chacun régler selon un ou plusieurs règlements.

Dans le cadre d'un achat groupé, il est bien entendu possible que l'un des acquéreurs, qui assure la commande de l'ensemble des biens ou services, règle le montant de l'ensemble des produits commandés, les autres acquéreurs se chargeant ensuite de rembourser celui des acquéreurs qui a procédé à l'avance des fonds. Comme on le conçoit, cette solution nécessite une avance de trésorerie. Elle peut également poser des problèmes de plafonnement des moyens de paiement, qui peuvent ainsi empêcher la vente, et également poser des problèmes d'assurance vis-à-vis des autres acquéreurs.

Bien entendu, une autre solution consiste à permettre à chaque acquéreur de commander et régler séparément les produits ou services, ce qui peut alors poser des problèmes de disponibilité des produits, de variations de tarifs, ou d'erreurs de commande, par exemple d'erreurs de numéro de vol.

Le but de l'invention est donc de pallier ces divers inconvénients et de permettre un paiement divisé d'un produit ou service, c'est-à-dire un paiement selon plusieurs règlements, et ce à partir d'une unique commande groupée, tout en palliant les inconvénients précités.

L'invention a donc pour objet, selon un premier aspect, un système de paiement d'un produit ou service, pour le paiement d'un produit ou service selon plusieurs règlements.

Selon une caractéristique générale de l'invention, ce système comprend un module de paiement accessible par un ou plusieurs acheteurs par l'intermédiaire d'un réseau de télécommunication pour permettre audit acheteur de sélectionner le produit ou service et transmettre audit module des informations portant sur le paiement divisé du produit ou service, comprenant le nombre de règlements et l'indication du ou de chaque acquéreur.

Le module de paiement comporte en outre des moyens pour émettre à destination du ou de chaque acquéreur un message électronique contenant des règles d'exécution de chaque règlement élaborées par le module de paiement.

Grâce à un tel système de paiement comprenant un tel module de paiement, il est possible de permettre à un premier acquéreur de réserver un ensemble de produits ou services, les autres acquéreurs recevant automatiquement un message contenant les règles d'exécution à suivre pour que chacun de ces acquéreurs procède au règlement de la fraction du prix qu'il doit.

Selon une autre caractéristique du système de paiement selon l'invention, le module de paiement comporte des moyens pour communiquer avec le vendeur ou le prestataire du produit ou service pour lui transmettre un ordre de livraison du produit ou service après que chaque règlement ait été effectué selon lesdits règles d'exécution.

Par exemple, les règles d'exécution comprennent le nombre de règlements et/ou les délais de règlement.

Selon encore une autre caractéristique de l'invention, le module de paiement communique par l'intermédiaire d'un réseau de télécommunication avec une plateforme électronique de gestion de réservations qui reçoit l'état du stock de produits ou services disponibles et qui assure la réservation d'un produit ou service.

Ainsi, lorsque le module de paiement est compatible avec une telle plateforme électronique de gestion de réservation ou « GDS », le système de paiement est particulièrement adapté pour la réservation et le paiement divisé de titres de transport et, en particulier, de billets d'avion.

Le module de paiement peut par ailleurs comporter des moyens d'élaboration d'un numéro de commande pour chaque règlement, ledit numéro de commande étant transmis conjointement avec lesdits règles d'exécution.

Dans un mode de réalisation, le module de paiement comporte des moyens de contrôle de commandes agissant sur la plateforme électronique de gestion de réservations pour modifier une réservation en fonction de l'exécution des règlements selon les règles d'exécution.

Le module de paiement peut par ailleurs comporter des moyens pour provoquer l'affichage d'un lien vers un site de paiement en ligne sur un écran accessible par chaque acquéreur, conjointement avec le message contenant les règles d'exécution.

Dans un mode de réalisation, le système de paiement comporte des moyens pour collecter les règlements et pour effectuer un règlement global du produit ou service auprès du vendeur ou prestataire.

L'invention a également pour objet, selon un second aspect, un procédé de paiement d'un produit ou service, pour le paiement d'un produit ou service selon plusieurs règlements, pour la mise en oeuvre d'un système tel que défini ci-dessus.

Ce procédé comporte les étapes suivantes :
- sélection par un acheteur d'un produit ou service et transmission, vers le module de paiement du système, d'informations portant sur le paiement divisé du produit ou service comprenant le nombre de règlements prévus pour le paiement dudit produit ou service et l'indication du ou de chaque acquéreur ; et
- émission vers chaque acquéreur d'un message électronique contenant des règles d'exécution de chaque règlement élaborées par le module de paiement.

Dans une application particulièrement intéressante, ce procédé s'applique au paiement d'un titre de transport.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique d'un système de réservation de produit ou service comprenant un système de paiement conforme à l'invention ; et
- la figure 2 montre un système de réservation d'un produit ou service comprenant une variante de réalisation d'un système de paiement conforme à l'invention.

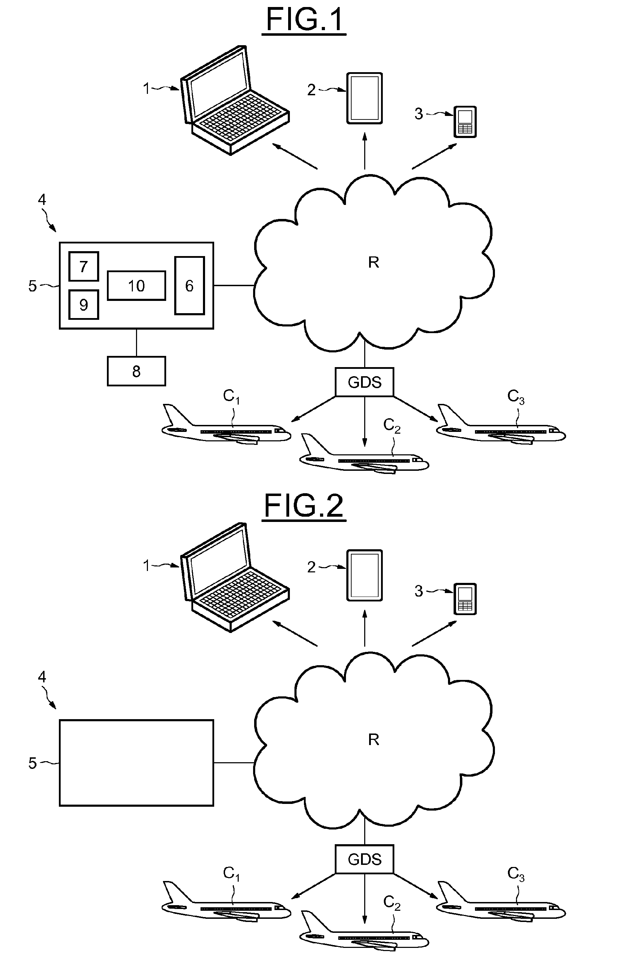

On se référera tout d'abord à la figure 1 qui montre un système de réservation en ligne d'un produit ou service selon un premier mode de réalisation de l'invention.

Dans l'exemple de réalisation illustré, le système de réservation est utilisé pour la réservation en ligne d'un billet d'avion auprès de différentes compagnies aériennes C1, C2 et C3.

Bien entendu, on ne sort pas du cadre de l'invention lorsqu'il s'agit de réserver et de payer d'autres types de produits ou services, par exemple d'autres types de titres de transport, ou de réserver un voyage complet, incluant une réservation d'hôtel, ou encore de procéder à la réservation ou au paiement d'un bien matériel.

Comme on le voit, la réservation s'effectue ici par l'intermédiaire d'une plateforme de réservation informatique consistant en une plateforme électronique de gestion de réservations ou GDS que les anglo-saxons désignent par le terme de « Global Distribution System ».

Cette plateforme GDS est accessible au client par l'intermédiaire d'un réseau de télécommunication R, en l'espèce le réseau Internet, au moyen de terminaux distants, tels qu'un ordinateur 1, une tablette tactile 2 ou un téléphone mobile 3.

Comme on le voit, ce système de réservation est également doté d'un système de paiement comprenant un module de paiement accessible par les utilisateurs au moyen des terminaux distants 1, 2, 3. Ce système de réservation est par exemple mis un oeuvre par un serveur connecté au réseau R et comporte lors tous les moyens matériels et logiciels lui permettant pour communiquer avec la plateforme GDS.

Pour ce faire, le module de paiement 5 est doté d'une interface 6 permettant d'assurer son raccordement au réseau de télécommunication R.

Le module de paiement 5 permet aux utilisateurs de consulter l'état du stock disponible au sein de la plateforme GDS pour réserver un ou plusieurs produits ou services.

Comme indiqué précédemment, il s'agit par exemple de réserver un titre de transport, en l'espèce un billet d'avion, proposé par les compagnies aériennes C1, C2, C3 et de permettre un paiement divisé du titre de transport selon plusieurs règlements.

Il s'agit soit de permettre à un acquéreur de régler son titre de transport selon plusieurs règlements, soit de permettre à plusieurs acquéreurs de régler la part du prix total qui leur revient.

Dans un mode de mise en oeuvre, un premier acquéreur accède au système de paiement pour recueillir l'indication des vols proposés par les compagnies aériennes C1, C2 ou C3. Après avoir sélectionné un ensemble de billets pour un ensemble correspondant de passagers, il envoie au module de traitement des informations portant sur le paiement divisé des titres de transport.

Pour ce faire, le module de paiement provoque l'affichage sur l'écran du terminal de l'acquéreur qui procède à la réservation, de fenêtres permettant de saisir ces informations.

Il s'agit de saisir des informations permettant d'identifier chaque acquéreur et de saisir le nombre de règlements prévus.

Bien entendu, il peut également simplement s'agir de saisir des informations permettant d'identifier chaque acquéreur, le module de paiement se chargeant de calculer la valeur de chaque règlement qui devra être acquitté par chaque acquéreur.

Les informations saisies par le premier acquéreur comprennent notamment l'adresse électronique de chaque acquéreur. Ainsi, le module de paiement 5 comporte un étage 7 permettant d'adresser à chaque acquéreur un message électronique à destination de chaque acquéreur contenant des règles d'exécution de chaque règlement. Bien entendu, un unique acquéreur peut être impliqué dans la réservation, lorsqu'il s'agit simplement de permettre un paiement d'un billet par un seul acquéreur selon plusieurs règlements.

Ces règles d'exécution sont élaborées par le module de paiement 5. Il s'agit du montant de chaque règlement et, de manière optionnelle, d'une date limite de règlement. Cette date limite peut par exemple être déterminée par défaut et être modifiable.

Le message transmis à chaque acquéreur est par exemple un courriel et incorpore avantageusement un lien vers l'adresse électronique d'un site Internet 8 de paiement en ligne.

Les acquéreurs qui reçoivent ce message électronique doivent donc, avant l'expiration du délai limite de paiement, se connecter au site de paiement 8 pour procéder au règlement.

On notera par ailleurs que le module de paiement 5 incorpore un étage 9 assurant l'élaboration d'un numéro de commande inséré dans chaque message transmis aux acquéreurs afin de permettre d'identifier le règlement.

On voit par ailleurs sur la figure 1 que le module de paiement 5 incorpore en outre un étage 10 de contrôle des commandes qui, par exemple, communique avec le site de paiement 8 pour vérifier la bonne exécution des règles de paiement et, notamment, que chaque paiement a bien été effectué, dans les délais, et avec un montant correct.

Cet étage 10 de contrôle des commandes communique également par l'intermédiaire de l'interface 6 avec la plateforme GDS pour lui transmettre un ordre de délivrance des titres de transport lorsque les règlements ont été effectués selon les règles d'exécution prédéfinies.

Par exemple, les titres de transport ne sont délivrés que lorsque l'ensemble des règlements ont été effectués.

Si tel n'est pas le cas, l'étage 10 de contrôle peut être configuré pour agir sur la plateforme pour modifier les commandes de manière à soit répartir un ou plusieurs paiement non effectués entre les acquéreurs restants, soit à annuler le ou les billets pour le(s)quel(s) un règlement n'a pas été effectué.

De même, le site de paiement en ligne, qui peut être constitué par le site d'un établissement bancaire, peut émettre vers le module de paiement 5 un message d'accord. Dans ce cas, le billet correspondant est émis. En cas de refus de la banque, le dossier peut être annulé ou, lorsqu'il s'agit d'un refus de l'établissement bancaire uniquement en ce qui concerne un ou plusieurs passagers, un billet peut être émis uniquement pour le ou les passagers qui ont acquitté le paiement dû, le dossier étant annulé pour les passagers qui n'ont pas effectué le règlement.

Dans le mode de réalisation de la figure 1, le module de paiement 5 communique avec site de paiement 8.

Il est également possible, en variante, comme illustré sur la figure 2, de prévoir un mode de réalisation dans lequel le module de paiement 5 est capable de collecter les paiements effectués par les acquéreurs et assurer le règlement total de la commande auprès de la compagnie ou d'un intermédiaire.

Dans ce cas, le système de paiement dispose de tous les agréments bancaires lui permettant de percevoir des fonds. Par exemple, un numéro de compte pourra être créé pour chaque acquéreur et un numéro de carte virtuelle pourra être généré et adressé à chaque acquéreur dès qu'un paiement est validé.

On notera enfin que dans les modes de réalisation envisagés, les terminaux manipulables par l'utilisateur pour l'utilisation du système de paiement peuvent être de diverses natures, qui communiquent par l'intermédiaire du réseau de télécommunication R avec le système de paiement hébergé dans un serveur distant.

On notera néanmoins que le système et le procédé qui viennent d'être décrits peuvent également être mis en oeuvre sous la forme d'une application logicielle qui peut être téléchargée et être implantée au sein du terminal manipulable par les utilisateurs.

## Revendications

1. Système de paiement d'un produit ou service, pour le paiement d'un produit ou service selon plusieurs règlements, **caractérisé en ce qu'**il comprend un module de paiement (5) accessible par un ou plusieurs acheteurs par l'intermédiaire d'un réseau de télécommunication (R) pour permettre audit acheteur de sélectionner le produit ou service et transmettre audit module (5) des informations portant sur le paiement divisé du produit ou service comprenant le nombre de règlements et l'indication du ou de chaque acquéreur, le module de paiement comprenant des moyens (7) pour émettre à destination du ou de chaque acquéreur un message électronique contenant des règles d'exécution de chaque règlement élaborées par le module de paiement.

2. Système selon la revendication 1, dans lequel le module de paiement comporte des moyens pour communiquer avec les vendeurs ou le prestataire du produit ou service pour lui transmettre un ordre de livraison du produit ou service après que chaque règlement ait été effectué selon lesdites règles d'exécution.

3. Système selon l'une des revendications 1 et 2, dans lequel les règles d'exécution comprennent le nombre de règlements.

4. Système selon l'une quelconque des revendications 1 à 3, dans lequel les règles d'exécution comprennent un délai de règlement.

5. Système selon l'une quelconque des revendications 1 à 4, dans lequel le module de paiement communique par l'intermédiaire d'un réseau de télécommunications (R) avec une plateforme électronique de gestion de réservations (GDS) qui reçoit un état du stock de produits ou services disponibles et qui assure la réservation d'un produit ou service.

6. Système selon la revendication 5, dans lequel le module de paiement comporte des moyens de contrôle de commande (10) agissant sur la plateforme électronique de gestion de réservations (GDS) pour modifier une réservation en fonction de l'exécution des règlements selon les règles d'exécution.

7. Système selon l'une quelconque des revendications 1 à 6, dans lequel le module de paiement comporte des moyens d'élaboration d'un numéro de commande pour chaque règlement, ledit numéro de commande étant transmis conjointement avec lesdites règles d'exécution.

8. Système selon l'une quelconque des revendications 1 à 7, dans lequel le module de paiement comporte des moyens pour provoquer l'affichage d'un lien vers un site (8) de paiement en ligne sur un écran accessible par acquéreur, conjointement avec le message contenant les règles d'exécution.

9. Système selon l'une quelconque des revendications 1 à 8, comprenant des moyens pour collecter les règlements et pour effectuer un règlement global du produit ou service auprès du vendeur ou du prestataire.

10. Procédé de paiement d'un produit ou service, pour le règlement d'un produit ou service selon plusieurs règlements, pour la mise en oeuvre d'un système de paiement selon l'une quelconque des revendications 1 à 9, **caractérisé en ce qu'**il comporte les étapes suivantes :
- sélection par un acheteur d'un produit ou service et transmission vers le module de paiement (5) dudit système, d'informations portant sur le paiement divisé du produit ou service comprenant le nombre de règlements prévus pour le paiement dudit produit ou service et l'indication du ou de chaque acquéreur ; et
- émission vers chaque acquéreur d'un message électronique contenant des règles d'exécution de chaque règlement élaborées par le module de paiement.

11. Procédé selon la revendication 10, dans lequel le produit ou service est un titre de transport.
